# EUROPEAN PATENT APPLICATION

(11) **EP 4 574 315 A1**
(43) Date of publication of application: **25.06.2025**
(21) Application number: 24215621.4
(22) Date of filing: 27.11.2024
(51) Int. Cl.: B23B 23/00, B23Q 3/18

(54) **TAILSTOCK UNIT AND MACHINE TOOL**

(30) Priority: 18.12.2023 JP 2023212994
(71) Applicant: DMG Mori Co., Ltd., Yamatokoriyama-shi, Nara 639-1160 (JP)
(72) Inventor: TADA, Osamu, Yamatokoriyama-shi, 639-1160 (JP)
(74) Representative: Isarpatent

(57) **Abstract**

A tailstock unit (50) includes: a centering unit (51) having a center pin (70) extending about a prescribed axis (160) and used for centering and holding a workpiece in the machine tool (100); and an object to be conveyed (56) detachably coupled to the centering unit (51) and conveyed together with the centering unit (51). One of the centering unit (51) and the object to be conveyed (56) is provided with a groove portion (80). The other of the centering unit (51) and the object to be conveyed (56) has a protruding portion (90), the protruding portion (90) being, when the centering unit (51) and the object to be conveyed (56) are coupled to each other, engaged with the groove portion (80) to be restricted in movement in an axial direction of the prescribed axis (160) and in a circumferential direction of the prescribed axis (160).

## Description

### CROSS REFERENCE TO RELATED APPLICATIONS

This application is based on Japanese Patent Application No. 2023-212994 filed on December 18, 2023 with the Japan Patent Office, the entire contents of which are hereby incorporated by reference.

### BACKGROUND OF THE INVENTION

### Field of the Invention

The present invention relates to a tailstock unit and a machine tool.

### Description of the Background Art

For example, Japanese Patent Laying-Open No. 2018-69423 discloses a centering device including: a rotation center detachably attached to a chuck for gripping a workpiece; and a center changer connected to a tool holder and capable of coupling and decoupling the rotation center to and from the tool holder. The tool holder is conveyed together with the rotation center by a tool changer between the chuck and a tool magazine.

### SUMMARY OF THE INVENTION

As disclosed in the above-mentioned Japanese Patent Laying-Open No. 2018-69423, there is known a centering device (a tailstock unit) capable of automatically replacing a rotation center (a centering unit) used for centering and holding a workpiece in a machine tool. In the centering device disclosed in PTL 1, however, when the rotation center is conveyed by the tool changer, inertial force such as excessive centrifugal force may act on the rotation center or vibrations may be applied to the rotation center. In this case, if the rotation center is not sufficiently held by the center changer, the rotation center may fall off.

An object of the present invention is to provide: a tailstock unit that prevents a centering unit used for centering and holding a workpiece in a machine tool from falling off during conveyance for automatic replacement; and a machine tool employing such a tailstock unit.

A tailstock unit according to the present invention includes: a centering unit having a center pin extending about a prescribed axis and used for centering and holding a workpiece in a machine tool; and an object to be conveyed detachably coupled to the centering unit and conveyed together with the centering unit. One of the centering unit and the object to be conveyed is provided with a groove portion. The other of the centering unit and the object to be conveyed has a protruding portion, the protruding portion being, when the centering unit and the object to be conveyed are coupled to each other, engaged with the groove portion to be restricted in movement in an axial direction of the prescribed axis and in a circumferential direction of the prescribed axis.

A machine tool according to the present invention includes: the tailstock unit; a centering unit holding portion that detachably holds the centering unit; and a conveyance device that detachably holds an object to be conveyed and conveys the object to be conveyed together with the centering unit.

The foregoing and other objects, features, aspects, and advantages of the present invention will become apparent from the following detailed description of the present invention when taken in conjunction with the accompanying drawings.

### BRIEF DESCRIPTION OF THE DRAWINGS

Fig. 1 is a front view showing a machine tool in an embodiment of the present invention.
Fig. 2 is a diagram showing a tailstock unit in the embodiment of the present invention.
Fig. 3 is a diagram showing a centering unit in Fig. 2.
Fig. 4 is a diagram showing a center holder in Fig. 3.
Fig. 5 is a diagram showing the center holder as viewed in a direction indicated by an arrow V in Fig. 4.
Fig. 6 is a diagram showing a groove portion provided in the centering unit in Fig. 4.
Fig. 7 is a diagram showing an object to be conveyed in Fig. 2.
Fig. 8 is an enlarged view of an area surrounded by a two-dot chain line VIII in Fig. 7.
Fig. 9 is a diagram showing the groove portion in Fig. 6 and a protruding portion engaged with the groove portion.
Fig. 10 is a diagram showing a first step performed when the centering unit is attached to a workpiece spindle.
Fig. 11 is a diagram showing a second step performed when the centering unit is attached to the workpiece spindle.
Fig. 12 is a diagram showing a third step performed when the centering unit is attached to the workpiece spindle.
Fig. 13 is a diagram showing a fourth step performed when the centering unit is attached to the workpiece spindle.
Fig. 14 is a diagram showing a fifth step performed when the centering unit is attached to the workpiece spindle.

### DESCRIPTION OF THE PREFERRED EMBODIMENTS

Embodiments of the present invention will be hereinafter described with reference to the accompanying drawings. In the drawings referred to below, the same or corresponding members are denoted by the same reference characters.

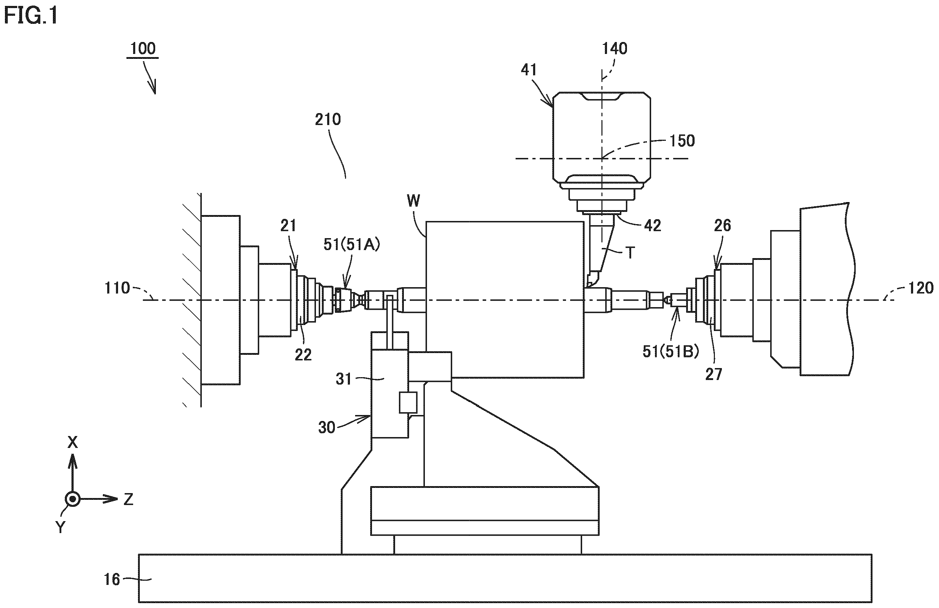

Fig. 1 is a front view showing a machine tool in an embodiment of the present invention. Fig. 1 shows the inside of the machine tool by representing a perspective view of a cover body forming the outer appearance of the machine tool.

Referring to Fig. 1, a machine tool 100 is a composite processing machine having both: a milling function of machining a workpiece by bringing a rotating tool into contact with a stationary workpiece; and a turning function of machining a workpiece by bringing a tool into contact with a rotating workpiece.

Machine tool 100 is a numerically controlled (NC) machine tool for which various operations for workpiece machining are automated by computer numerical control.

In the present specification, for convenience of explanation of the configuration of machine tool 100, an axis parallel to the rotation axis of the workpiece and extending in the horizontal direction is referred to as a "Z-axis", an axis orthogonal to the Z-axis and extending in the horizontal direction is referred to as a "Y-axis", and an axis extending in the up-down direction is referred to as an "X-axis". In Fig. 1, the rightward direction is referred to as a "+Z-axis direction", and the leftward direction is referred to as a "-Z-axis direction". With respect to the surface of the sheet of paper showing Fig. 1, the direction toward a viewer of the figure is referred to as a "+Y-axis direction", the direction away from a viewer of the figure is referred to as a "-Y-axis direction". In Fig. 1, the upward direction is referred to as a "+X-axis direction", and the downward direction is referred to as a "-X-axis direction".

Machine tool 100 includes a bed 16, a workpiece spindle 21, an opposing workpiece spindle 26, a tool spindle 41, and a tool rest 30. Workpiece spindle 21, opposing workpiece spindle 26, tool spindle 41, and tool rest 30 are disposed in a machining area 210. Machining area 210 is a space in which a workpiece is machined, and is sealed by a cover body (not shown) so as to prevent foreign substances such as swarf or cutting oil caused by workpiece machining from leaking to the outside of machining area 210.

Bed 16 is a base member for supporting workpiece spindle 21, opposing workpiece spindle 26, tool spindle 41, tool rest 30, and the like, and is installed on a floor surface of a factory or the like. Bed 16 is made of metal such as castings.

Workpiece spindle 21 and opposing workpiece spindle 26 is capable of holding a workpiece. Workpiece spindle 21 is driven by a motor to rotate about a rotation central axis 110 parallel to the Z-axis (C-axis rotation). Workpiece spindle 21 is provided with a chuck 22 that is operated by hydraulic pressure or the like to detachably hold the workpiece.

Opposing workpiece spindle 26 is disposed to face workpiece spindle 21 in the Z-axis direction. Opposing workpiece spindle 26 is driven by a motor to rotate about a rotation central axis 120 parallel to the Z-axis and extending in a straight line along rotation central axis 110. Opposing workpiece spindle 26 is provided with a chuck 27 that is operated by hydraulic pressure or the like to detachably hold the workpiece.

Workpiece spindle 21 is fixed to bed 16. Opposing workpiece spindle 26 is movable in the Z-axis direction by various types of feed mechanisms, guide mechanisms, and motors.

Tool spindle 41 is capable of holding a tool. Tool spindle 41 is driven by a motor to rotate about a rotation central axis 140 parallel to the X-axis in a reference posture described later. Tool spindle 41 incorporates a clamping mechanism (not shown) for detachably holding the tool.

Tool spindle 41 is further swivelable about a swivel central axis 150 parallel to the Y-axis (B-axis swiveling). Swivel central axis 150 intersects with rotation central axis 140. Tool spindle 41 swivels, for example, in a range of ±120° with respect to a reference posture (the posture of tool spindle 41 shown in Fig. 1) in which a spindle end surface 42 of tool spindle 41 faces downward.

Tool spindle 41 is movable in the X-axis direction, the Y-axis direction, and the Z-axis direction by various types of feed mechanisms, guide mechanisms, and motors. Although not shown in Fig. 1, an automatic tool changer (ATC) for automatically changing a tool held by tool spindle 41 and a tool magazine for accommodating a tool for replacement are provided around workpiece spindle 21.

Tool rest 30 is capable of holding a tool. Fig. 1 shows tool rest 30 to which a vibration preventing device 31 for preventing vibration of a workpiece is attached. Tool rest 30 is movable in the X-axis direction and the Z-axis direction by various types of feed mechanisms, guide mechanisms, and motors.

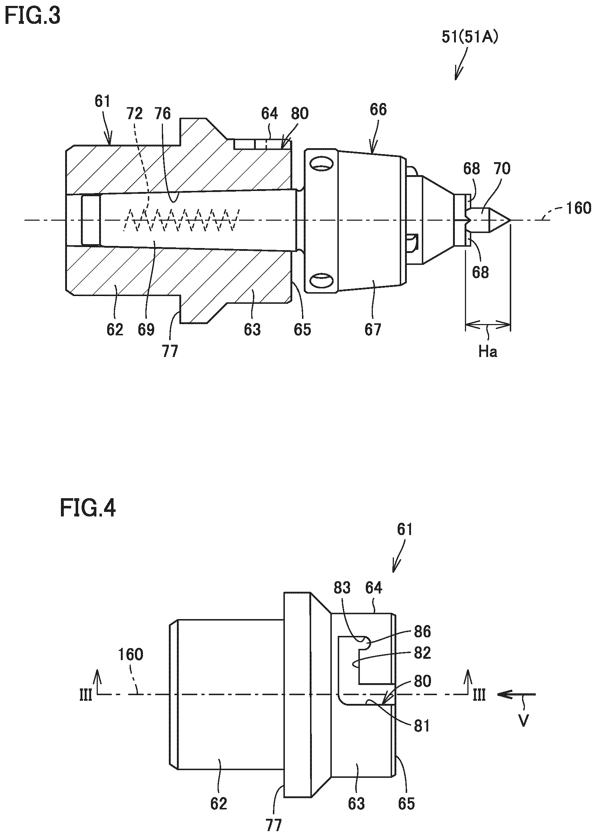

Machine tool 100 further includes a centering unit 51 (51A, 51B). Centering unit 51 is used for centering and holding a workpiece in machine tool 100. Centering unit 51 is held by workpiece spindle 21 or opposing workpiece spindle 26. Centering unit 51 includes a center pin 70 (see Fig. 3 described later) extending axially along rotation central axes 110 and 120, and center pin 70 serves to support the end surface of the workpiece.

Fig. 1 shows, as an example of workpiece machining using centering unit 51, the manner of workpiece machining in which both end surfaces of a workpiece W are held and supported with use of centering units 51A and 51B.

Centering unit 51A is held by workpiece spindle 21. Centering unit 51A, which is called a work driving center or a face driver, is capable of transmitting rotation from workpiece spindle 21 to a workpiece. Centering unit 51A supports the end surface of workpiece W axially on rotation central axis 110 by center pin 70, and grips the end surface of workpiece W by a drive key 68 (see Fig. 3 described later).

Centering unit 51B is held by opposing workpiece spindle 26. Centering unit 51B supports the end surface of workpiece W axially on rotation central axis 120 by center pin 70.

In such a configuration, turning processing is performed on workpiece W by bringing a tool T held by tool spindle 41 into contact with workpiece W while workpiece W centered and held at its both ends in the Z-axis direction by centering units 51A and 51B is rotated about rotation central axes 110 and 120.

The tool magazine (not shown) accommodates centering unit 51 for replacement together with various tools. Centering unit 51 is automatically replaced between the tool magazine and workpiece spindle 21 or opposing workpiece spindle 26 when tool spindle 41 is used as a conveyance device for conveying centering unit 51. The structure of tailstock unit 50 in the present embodiment will then be described.

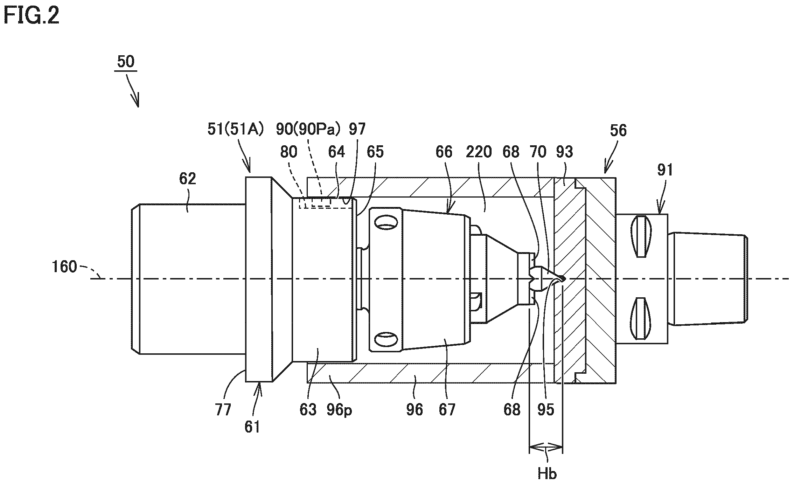

Fig. 2 is a diagram showing a tailstock unit in the embodiment of the present invention. Fig. 2 representatively shows centering unit 51A held by tool spindle 41.

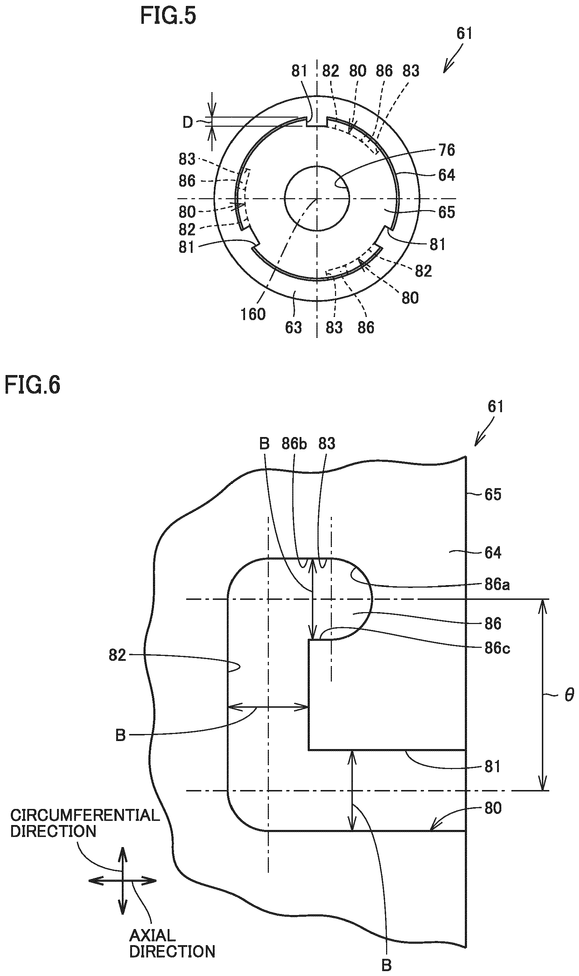

Fig. 3 is a diagram showing the centering unit in Fig. 2. Fig. 4 is a diagram showing the center holder in Fig. 3. Fig. 3 shows a cross section of a center holder 61 as viewed in a direction along an arrow line III-III in Fig. 4. Fig. 5 is a diagram showing the center holder as viewed in a direction indicated by an arrow V in Fig. 4.

Referring to Figs. 2 to 5, a tailstock unit 50 in the present embodiment includes centering unit 51 and an object to be conveyed 56. Object to be conveyed 56 is detachably coupled to centering unit 51. Object to be conveyed 56 is conveyed together with centering unit 51. When centering unit 51 held by tool spindle 41 is replaced, object to be conveyed 56 is coupled to centering unit 51. Object to be conveyed 56 is held by tool spindle 41 and conveyed together with centering unit 51.

As shown in Figs. 3 and 4, centering unit 51 includes a center 66 and center holder 61.

Center 66 has a center pin 70. Center pin 70 extends around a prescribed axis 160. Prescribed axis 160 is an imaginary straight line representing the central axis of center pin 70. Center pin 70 has a pin shape extending axially along prescribed axis 160. When centering unit 51 (51A) is held by workpiece spindle 21, prescribed axis 160 extends in a straight line along rotation central axis 110 of workpiece spindle 21 in the Z-axis direction. Center pin 70 is supported by a center main body 67 (described later) to be movable back and forth in the axial direction of prescribed axis 160.

Center 66 further includes center main body 67 and a plurality of drive keys 68. Center main body 67 extends around prescribed axis 160. Center pin 70 protrudes from center main body 67 in the axial direction of prescribed axis 160.

The plurality of drive keys 68 are attached to center main body 67. The plurality of drive keys 68 are disposed radially outward from prescribed axis 160 with respect to center pin 70. The plurality of drive keys 68 are provided at intervals in the circumferential direction of prescribed axis 160. Drive key 68 has a cutting edge shape and is brought into contact with the end surface of the workpiece in the axial direction of prescribed axis 160 (rotation central axis 110) to thereby grip the end surface of the workpiece in the circumferential direction of prescribed axis 160 (rotation central axis 110).

Center 66 further includes an elastic member 72. Elastic member 72 is incorporated in center main body 67. Elastic member 72 is formed, for example, of a coil spring extending about prescribed axis 160. Elastic member 72 generates elastic force for pressing center pin 70 toward a workpiece. Elastic member 72 causes elastic force in the axial direction of prescribed axis 160 to act on center pin 70.

In centering unit 51 alone, the protruding length of center pin 70 from center main body 67 is Ha. The workpiece is provided with a pin insertion hole recessed from the end surface of the workpiece to be capable of receiving center pin 70. When the workpiece is centered and held by centering unit 51, center pin 70 is inserted into the pin insertion hole. Center pin 70 is moved back to the inside of center main body 67 against the elastic force of elastic member 72 by the workpiece. At this time, the protruding length of center pin 70 from center main body 67 shows a value smaller than Ha.

Center main body 67 has a shaft portion 69. Shaft portion 69 extends axially about prescribed axis 160. Shaft portion 69 has a tapered shape such that its diameter decreases away from center pin 70 in the axial direction of prescribed axis 160.

As shown in Figs. 3 to 5, center holder 61 entirely has a cylindrical shape centered on prescribed axis 160. Center holder 61 is provided with a shaft insertion hole 76. Shaft insertion hole 76 is provided as a through hole extending about prescribed axis 160. Shaft insertion hole 76 has a tapered shape capable of receiving shaft portion 69. By inserting shaft portion 69 into shaft insertion hole 76, center 66 is installed in center holder 61.

Center holder 61 includes a shank portion 62 and a holder main body 63. Shank portion 62 and holder main body 63 are contiguously provided in the axial direction of prescribed axis 160. Shank portion 62 is a portion gripped by chuck 22 when centering unit 51 is held by workpiece spindle 21. Holder main body 63 is disposed between center pin 70 and shank portion 62 in the axial direction of prescribed axis 160.

Center holder 61 (holder main body 63) has an outer circumferential surface 64, a first holder end surface 65, and a second holder end surface 77.

Outer circumferential surface 64 has a fixed diameter about prescribed axis 160 and extends in the axial direction of prescribed axis 160. Each end surface of first holder end surface 65 and second holder end surface 77 is formed of a flat plane orthogonal to prescribed axis 160. First holder end surface 65 and second holder end surface 77 form end surfaces of holder main body 63 at one end portion and the other end portion, respectively, in the axial direction of prescribed axis 160. The outer circumferential edge of first holder end surface 65 intersects with outer circumferential surface 64 to form a corner portion. Center main body 67 protrudes from first holder end surface 65 in the axial direction of prescribed axis 160. The inner circumferential edge of second holder end surface 77 intersects with the outer circumferential surface of shank portion 62 to form a corner portion.

Fig. 6 is a diagram showing a groove portion provided in the centering unit in Fig. 4. In Fig. 6, outer circumferential surface 64 of center holder 61 is developed in the vertical direction on the surface of the sheet of paper showing Fig. 6.

As shown in Figs. 3 to 6, centering unit 51 is provided with a groove portion 80. Groove portion 80 is provided in center holder 61 (holder main body 63). Groove portion 80 has a groove shape recessed from outer circumferential surface 64.

Centering unit 51 is provided with a plurality of groove portions 80. The plurality of groove portions 80 are provided at intervals in the circumferential direction of prescribed axis 160. The plurality of groove portions 80 are provided at equal intervals in the circumferential direction of prescribed axis 160.

Groove portion 80 includes a first segment portion 81, a second segment portion 82, and a third segment portion 83. First segment portion 81, second segment portion 82, and third segment portion 83 contiguously extend. Second segment portion 82 is disposed between first segment portion 81 and third segment portion 83. Each of a groove width B and a groove depth D of groove portion 80 is constant across first segment portion 81, second segment portion 82, and third segment portion 83. Groove portion 80 is configured to have groove width B and groove depth D through which a protruding portion 90 described later can be inserted.

First segment portion 81 extends in the axial direction of prescribed axis 160. First segment portion 81 is opened at one end in the axial direction of prescribed axis 160. First segment portion 81 is opened at first holder end surface 65.

Second segment portion 82 extends in the circumferential direction of prescribed axis 160. Second segment portion 82 extends in the circumferential direction of prescribed axis 160 at a position away from first holder end surface 65 in the axial direction of prescribed axis 160. Second segment portion 82 is connected to first segment portion 81. Second segment portion 82 is connected at one end in the circumferential direction of prescribed axis 160 to first segment portion 81. Second segment portion 82 is connected to third segment portion 83. Second segment portion 82 is connected at the other end in the circumferential direction of prescribed axis 160 to third segment portion 83.

Third segment portion 83 extends in the axial direction of prescribed axis 160. Third segment portion 83 has a closed end portion 86. Closed end portion 86 is closed at one end in the axial direction of prescribed axis 160. Closed end portion 86 is provided at a position surrounded by: a groove wall 86a disposed at one end of third segment portion 83 in the axial direction of prescribed axis 160; and groove walls 86b and 86c facing each other in the circumferential direction of prescribed axis 160. Groove wall 86a extends in an arc shape corresponding to the shape of protruding portion 90 described later. Groove wall 86b extends in the axial direction of prescribed axis 160 from one end of groove wall 86a extending in an arc shape. Groove wall 86c extends in the axial direction of prescribed axis 160 from the other end of groove wall 86a extending in an arc shape. Third segment portion 83 is connected at the other end in the axial direction of prescribed axis 160 to second segment portion 82.

Third segment portion 83 is shorter in length in the axial direction of prescribed axis 160 than first segment portion 81. An angle θ about prescribed axis 160 between the groove center of first segment portion 81 and the groove center of third segment portion 83 is, for example, 45°.

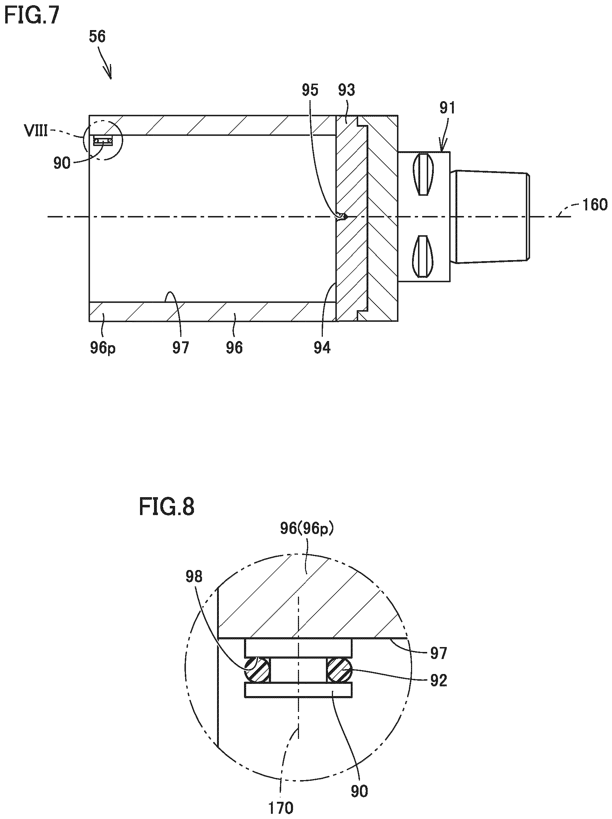

Fig. 7 is a diagram showing an object to be conveyed in Fig. 2. In Figs. 2 and 7, a base portion 93 and an extending portion 96 of object to be conveyed 56 are shown in cross section. Fig. 8 is an enlarged view of an area surrounded by a two-dot chain line VIII in Fig. 7.

Referring to Figs. 2, 7, and 8, object to be conveyed 56 includes a shank portion 91, base portion 93, and extending portion 96. Object to be conveyed 56 extends about prescribed axis 160 in the state in which it is coupled to centering unit 51.

As shown in Fig. 7, shank portion 91 is gripped by the clamping mechanism of tool spindle 41 when object to be conveyed 56 is held by tool spindle 41. The specifications of shank portion 91 are not particularly limited and may, for example, be CAPTO, BT, or HSK.

Base portion 93 is connected to shank portion 91. Base portion 93 is fastened to shank portion 91 with a bolt or the like. Base portion 93 has a disc shape centered on prescribed axis 160 and having a thickness direction corresponding to the axial direction of prescribed axis 160. Base portion 93 has an end surface 94. End surface 94 is formed of a flat plane orthogonal to prescribed axis 160.

Base portion 93 is provided with a pin insertion hole 95. Pin insertion hole 95 has a recessed shape recessed from end surface 94 to be capable of receiving center pin 70. Pin insertion hole 95 is provided axially on prescribed axis 160.

Extending portion 96 extends from base portion 93 in the axial direction of prescribed axis 160. Extending portion 96 extends from base portion 93 in the direction away from shank portion 91 in the axial direction of prescribed axis 160. Extending portion 96 is provided at a position away from prescribed axis 160 and radially outward from prescribed axis 160. Extending portion 96 has a cylindrical shape centered on prescribed axis 160. Extending portion 96 is connected at one end along prescribed axis 160 to the outer circumferential edge of end surface 94. Extending portion 96 has a tip end portion 96p. Tip end portion 96p is disposed at a position away from base portion 93 in the axial direction of prescribed axis 160.

As shown in Figs. 7 and 8, object to be conveyed 56 further includes protruding portion 90. Protruding portion 90 has a shape protruding radially inward of prescribed axis 160 from an inner circumferential surface 97 of extending portion 96. Protruding portion 90 has a pin shape extending in a cylindrical shape centered on a central axis 170. Central axis 170 is parallel to the radial direction of prescribed axis 160. Protruding portion 90 is provided with an O-ring groove 98. O-ring groove 98 has a groove shape recessed from the outer circumferential surface of protruding portion 90 and extending around central axis 170. An O-ring 92 is fitted into O-ring groove 98.

Object to be conveyed 56 has a plurality of protruding portions 90. The plurality of protruding portions 90 are provided at intervals in the circumferential direction of prescribed axis 160. The plurality of protruding portions 90 are provided at equal intervals in the circumferential direction of prescribed axis 160. The plurality of protruding portions 90 are provided at angular positions corresponding to the plurality of groove portions 80 in the circumferential direction of prescribed axis 160.

A plurality of extending portions 96 may be provided at intervals in the circumferential direction of prescribed axis 160, and each extending portion 96 may be configured to extend in an arm shape in the axial direction of prescribed axis 160 from base portion 93 at an angular position where each protruding portion 90 is provided.

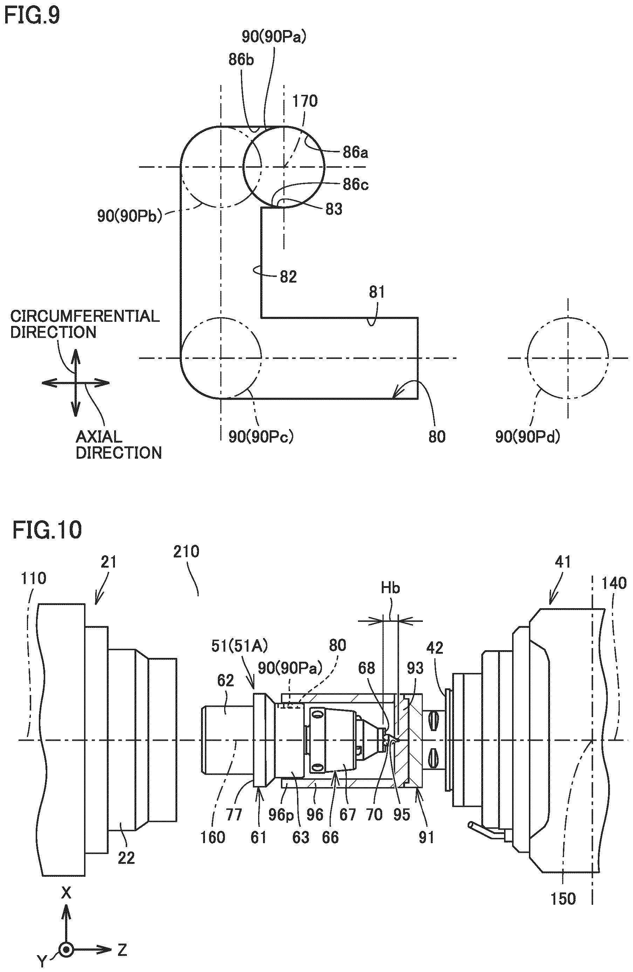

Fig. 9 is a diagram showing a groove portion in Fig. 6 and a protruding portion engaged with the groove portion. Referring to Figs. 2 and 9, the following describes configurations of centering unit 51 and object to be conveyed 56 coupled to each other.

Center main body 67 and base portion 93 face each other in the axial direction of prescribed axis 160. Tip end portion 96p of extending portion 96 is disposed on the outer circumference of center holder 61 (holder main body 63). Tip end portion 96p faces outer circumferential surface 64 of holder main body 63.

Center pin 70 is disposed at a position between center holder 61 and base portion 93 in the axial direction of prescribed axis 160 and surrounded by extending portion 96 from the outer circumference of prescribed axis 160. A space 220 is provided in a position surrounded by holder main body 63, base portion 93, and extending portion 96. Center pin 70 is disposed in space 220.

Object to be conveyed 56 (base portion 93) is in contact with center pin 70 in the axial direction of prescribed axis 160. Center pin 70 is inserted into pin insertion hole 95. Center pin 70 is moved back to the inside of center main body 67 against the elastic force of elastic member 72 by object to be conveyed 56 (base portion 93). At this time, the protruding length of center pin 70 from center main body 67 is Hb smaller than Ha (Hb < Ha).

Protruding portion 90 is engaged with groove portion 80. Protruding portion 90 has a shape protruding from tip end portion 96p of extending portion 96 toward outer circumferential surface 64 of holder main body 63. Protruding portion 90 is engaged with groove portion 80 to be restricted in movement in the axial direction of prescribed axis 160 and in the circumferential direction of prescribed axis 160.

More specifically, protruding portion 90 is disposed at closed end portion 86 of third segment portion 83 (protruding portion 90 disposed at a first position Pa in Fig. 9). Protruding portion 90 is in contact with arc-shaped groove wall 86a in the axial direction and the circumferential direction of prescribed axis 160. When center pin 70 is moved back to the inside of center main body 67 by object to be conveyed 56, the elastic force from elastic member 72 is applied to object to be conveyed 56 through center pin 70. Thereby, protruding portion 90 is pressed against groove wall 86a of closed end portion 86 in the axial direction of prescribed axis 160.

Groove wall 86a may be formed of a flat plane orthogonal to prescribed axis 160. In this case, protruding portion 90 comes into contact with groove wall 86a in the axial direction of prescribed axis 160, and comes into contact with groove walls 86b and 86c in the circumferential direction of prescribed axis 160.

Figs. 10 to 14 are diagrams showing steps performed when a centering unit is attached to a workpiece spindle.

Referring to Figs. 9 and 10, centering unit 51 is accommodated in a tool magazine (not shown) in the state in which it is coupled to object to be conveyed 56. Protruding portion 90 is disposed at closed end portion 86 in third segment portion 83 (protruding portion 90 disposed at first position Pa in Fig. 9). Centering unit 51 accommodated in the tool magazine is conveyed into machining area 210 and then mounted on tool spindle 41. More specifically, shank portion 91 of object to be conveyed 56 is inserted into tool spindle 41 while object to be conveyed 56 is gripped by an automatic tool changer (not shown). The clamping mechanism incorporated in tool spindle 41 grips shank portion 91, so that tool spindle 41 holds object to be conveyed 56.

Tool spindle 41 is swiveled about swivel central axis 150 (B-axis swiveling) and moved as appropriate in the X-axis direction, the Y-axis direction, and the Z-axis direction to thereby cause centering unit 51 to face workpiece spindle 21 in the Z-axis direction. At this time, rotation central axis 110 of workpiece spindle 21, prescribed axis 160 of centering unit 51, and rotation central axis 140 of tool spindle 41 extend in a straight line in the Z-axis direction.

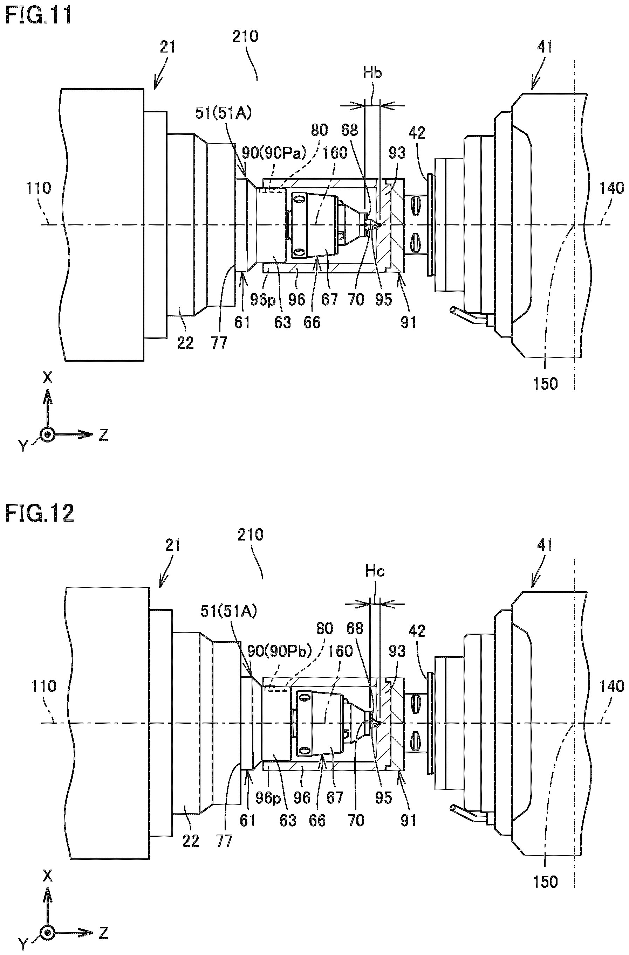

Referring to Fig. 11, tool spindle 41 is moved in the -Z-axis direction by cutting feed to a position at which second holder end surface 77 comes into contact with the end surface of chuck 22. Shank portion 62 of centering unit 51 is inserted into chuck 22.

Referring to Figs. 9 and 12, tool spindle 41 is further moved in the -Z-axis direction. Protruding portion 90 passes through third segment portion 83 and moves from first position Pa to a second position Pb at which third segment portion 83 and second segment portion 82 form a corner portion (protruding portion 90 disposed at second position Pb in Fig. 9). At this time, the protruding length of center pin 70 from center main body 67 is Hc smaller than Hb (Hc < Hb). Chuck 22 grips shank portion 62 of center holder 61.

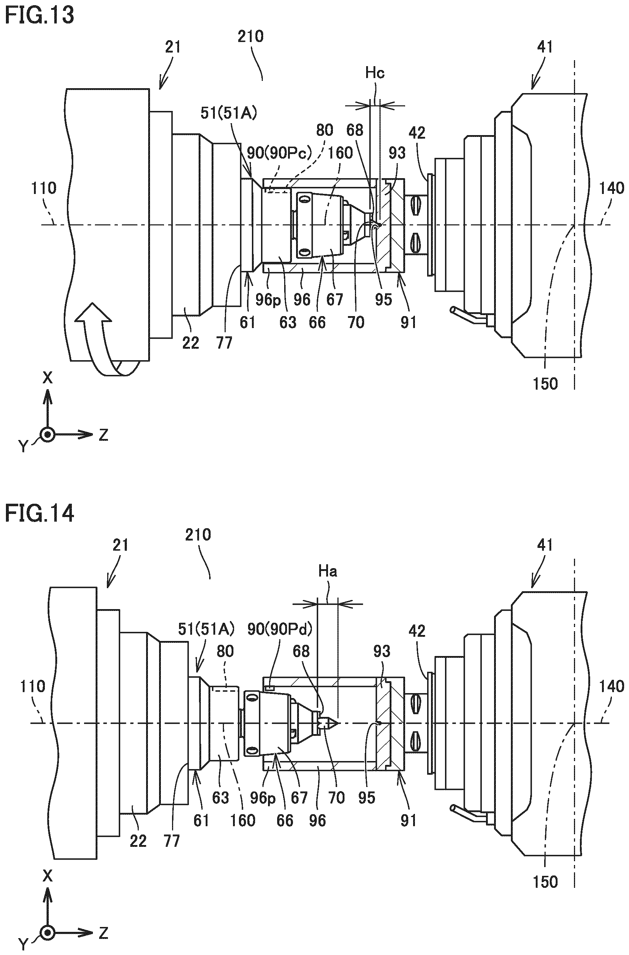

Referring to Figs. 9 and 13, workpiece spindle 21 is rotated about rotation central axis 110 (C-axis rotation). Protruding portion 90 passes through second segment portion 82 and moves from second position Pb to a third position Pc at which second segment portion 82 and first segment portion 81 form a corner portion (protruding portion 90 disposed at third position Pc in Fig. 9). At this time, instead of the C-axis rotation of workpiece spindle 21, tool spindle 41 may be rotated about rotation central axis 140.

Referring to Figs. 9 and 14, workpiece spindle 21 is moved in the +Z-axis direction. Protruding portion 90 passes through first segment portion 81 and moves from third position Pc to a fourth position Pd on the outside of groove portion 80 (protruding portion 90 disposed at fourth position Pd in Fig. 9). Thereby, object to be conveyed 56 and centering unit 51 are decoupled from each other. Thereafter, tool spindle 41 is retracted to an ATC position, and object to be conveyed 56 is returned to the tool magazine by the automatic tool changer.

The step of detaching centering unit 51 from workpiece spindle 21 should only be performed in the reverse order of the above-described step of attaching centering unit 51 to workpiece spindle 21. The gripping of center holder 61 by chuck 22 should only be released after the C-axis rotation of workpiece spindle 21 causes protruding portion 90 to move from third position Pc to second position Pb.

To summarize the configurations of tailstock unit 50 and machine tool 100 in the embodiment of the present invention described above, tailstock unit 50 in the present embodiment includes: centering unit 51 having center pin 70 extending about prescribed axis 160 and used for centering and holding a workpiece in machine tool 100; and object to be conveyed 56 detachably coupled to centering unit 51 and conveyed together with centering unit 51. Centering unit 51 is provided with groove portion 80. Object to be conveyed 56 has protruding portion 90, protruding portion 90 being, when centering unit 51 and object to be conveyed 56 are coupled to each other, engaged with groove portion 80 to be restricted in movement in the axial direction of prescribed axis 160 and in the circumferential direction of prescribed axis 160.

Further, machine tool 100 in the present embodiment includes: tailstock unit 50; workpiece spindle 21 (opposing workpiece spindle 26) as a centering unit holding portion that detachably holds centering unit 51; and tool spindle 41 as a conveyance device that detachably holds object to be conveyed 56 and conveys object to be conveyed 56 together with centering unit 51.

According to tailstock unit 50 and machine tool 100 configured as described above, protruding portion 90 is engaged with groove portion 80 to be restricted in movement in the axial direction of prescribed axis 160 and in the circumferential direction of prescribed axis 160. This makes it possible to more reliably prevent centering unit 51 from falling off from object to be conveyed 56 even if excessive inertial force acts on centering unit 51 or excessive vibration is applied to centering unit 51 when object to be conveyed 56 is conveyed together with centering unit 51.

Particularly in the present embodiment, during the B-axis swiveling of tool spindle 41, centrifugal force radially outward from swivel central axis 150 acts on centering unit 51, or inertial force in the circumferential direction of swivel central axis 150 acts on centering unit 51. Even in such a case, the above-described structure of engagement between protruding portion 90 and groove portion 80 can prevent centering unit 51 from falling off from object to be conveyed 56.

Further, groove portion 80 includes: first segment portion 81 extending in the axial direction of prescribed axis 160 and opened at one end in the axial direction of prescribed axis 160; second segment portion 82 extending in the circumferential direction of prescribed axis 160 and connected to first segment portion 81; and third segment portion 83 having closed end portion 86 and extending in the axial direction of prescribed axis 160, closed end portion 86 being closed at one end in the axial direction of prescribed axis 160, and third segment portion 83 being connected at the other end in the axial direction of prescribed axis 160 to second segment portion 82. When centering unit 51 and object to be conveyed 56 are coupled to each other, protruding portion 90 is disposed at closed end portion 86.

According to such a configuration, protruding portion 90 is disposed at closed end portion 86 when centering unit 51 and object to be conveyed 56 are coupled to each other. Thereby, protruding portion 90 does not come off from groove portion 80 unless protruding portion 90 moves through third segment portion 83 extending in the axial direction of prescribed axis 160, second segment portion 82 extending in the circumferential direction of prescribed axis 160, and first segment portion 81 extending in the axial direction of prescribed axis 160 in this order. This makes it possible to more reliably maintain the state of engagement between protruding portion 90 and groove portion 80.

Particularly in the present embodiment, centering unit 51 is held by workpiece spindle 21 rotatable about rotation central axis 110 extending in a straight line along prescribed axis 160, and object to be conveyed 56 is held by tool spindle 41 movable in the Z-axis direction parallel to prescribed axis 160. With such a configuration, when centering unit 51 and object to be conveyed 56 are coupled to and decoupled from each other, protruding portion 90 can be moved along groove portion 80 (first segment portion 81, second segment portion 82, and third segment portion 83) by the C-axis rotation of workpiece spindle 21 and the movement of tool spindle 41 in the Z-axis direction.

Further, center pin 70 is supported to be movable back and forth in the axial direction of prescribed axis 160. Centering unit 51 further includes elastic member 72 that generates elastic force for pressing center pin 70 toward a workpiece. When centering unit 51 and object to be conveyed 56 are coupled to each other, object to be conveyed 56 comes into contact with center pin 70 to move center pin 70 back in the axial direction of prescribed axis 160. Thereby, the elastic force from elastic member 72 is applied to object to be conveyed 56 through center pin 70, so that protruding portion 90 is pressed against groove wall 86a of closed end portion 86 in the axial direction of prescribed axis 160.

According to such a configuration, by utilizing the elastic force generated by elastic member 72, protruding portion 90 can be more reliably retained at closed end portion 86.

Centering unit 51 further includes center holder 61 including outer circumferential surface 64 centered on prescribed axis 160. Object to be conveyed 56 includes base portion 93 and extending portion 96 that is provided at a position away from prescribed axis 160 and radially outward from prescribed axis 160, extending portion 96 extending from base portion 93 in the axial direction of prescribed axis 160. When centering unit 51 and object to be conveyed 56 are coupled to each other, center pin 70 is disposed at a position between center holder 61 and base portion 93 in the axial direction of prescribed axis 160 and surrounded by extending portion 96 from an outer circumference of prescribed axis 160. Tip end portion 96p of extending portion 96 is disposed on an outer circumference of center holder 61 so as to face outer circumferential surface 64. Centering unit 51 is provided with groove portion 80 having a groove shape recessed from outer circumferential surface 64. Object to be conveyed 56 has protruding portion 90 shaped to protrude from tip end portion 96p of extending portion 96 toward outer circumferential surface 64.

According to such a configuration, center pin 70 is disposed at a position between center holder 61 and base portion 93 in the axial direction of prescribed axis 160 and surrounded by extending portion 96 from the outer circumference of prescribed axis 160, with the result that foreign substances are less likely to adhere to center pin 70 during conveyance. Further, the structure of engagement between groove portion 80 and protruding portion 90 can be provided by utilizing outer circumferential surface 64 of center holder 61 and tip end portion 96p of extending portion 96 that are positioned to face each other between centering unit 51 and object to be conveyed 56.

Further, when centering unit 51 and object to be conveyed 56 are coupled to each other, a plurality of sets of structures of engagement between each pair of groove portion 80 and protruding portion 90 are provided at intervals in the circumferential direction of prescribed axis 160. The plurality of sets of structures of engagement are located away in the axial direction of prescribed axis 160 from the portion at which center pin 70 comes into contact with object to be conveyed 56 (base portion 93). According to such a configuration, centering unit 51 is supported by object to be conveyed 56 at one point axially on prescribed axis 160 and at a plurality of points on the circumference centered on prescribed axis 160 at a position away from the one point in the axial direction of prescribed axis 160, with the result that centering unit 51 can be more reliably prevented from falling off from object to be conveyed 56.

The present embodiment has been described with regard to the configuration in which centering unit 51 is provided with groove portion 80 and object to be conveyed 56 has protruding portion 90, but the present invention may have a configuration in which the object to be conveyed is provided with a recessed portion and the centering unit has a protruding portion. Further, in the present invention, the centering unit holding portion capable of detachably holding the centering unit is not limited to the workpiece spindle, but may be, for example, a tailstock or a tool rest. Further, in the present invention, the conveyance device for conveying the object to be conveyed is not limited to a tool spindle, but may, for example, be a mobile robot such as an industrial mobile robot (IMR) or an autonomous mobile robot (AMR), or may be a tool rest ATC device for automatically replacing a tool to be mounted on the tool rest.

Further, the present embodiment implements a configuration in which elastic member 72 for pressing center pin 70 toward the workpiece is used to press protruding portion 90 against the groove wall of groove portion 80, but the present invention is not limited thereto. For example, in a tailstock unit in which a center pin is fixed not to be movable back and forth in the axial direction of a prescribed axis, biasing means such as an elastic member for applying force to push the protruding portion toward the groove wall of the groove portion may be provided in the object to be conveyed, or may be provided separately from the centering unit and the object to be conveyed.

Although the embodiments of the present invention have been described, it should be understood that the embodiments disclosed herein are illustrative and non-restrictive in every respect. The scope of the present invention is defined by the terms of the claims, and is intended to include any modifications within the meaning and scope equivalent to the terms of the claims.

## Claims

1. A tailstock unit comprising:
a centering unit (51) having a center pin (70) extending about a prescribed axis (160) and used for centering and holding a workpiece in a machine tool (100); and
an object to be conveyed (56) detachably coupled to the centering unit (51) and conveyed together with the centering unit (51), wherein
one of the centering unit (51) and the object to be conveyed (56) is provided with a groove portion (80), and
the other of the centering unit (51) and the object to be conveyed (56) has a protruding portion (90), the protruding portion (90) being, when the centering unit (51) and the object to be conveyed (56) are coupled to each other, engaged with the groove portion (80) to be restricted in movement in an axial direction of the prescribed axis (160) and in a circumferential direction of the prescribed axis (160).

2. The tailstock unit according to claim 1, wherein
the groove portion (80) includes
a first segment portion (81) extending in the axial direction of the prescribed axis (160) and opened at one end in the axial direction of the prescribed axis (160),
a second segment portion (82) extending in the circumferential direction of the prescribed axis (160) and connected to the first segment portion (81), and
a third segment portion (83) having a closed end portion (86) and extending in the axial direction of the prescribed axis (160), the closed end portion (86) being closed at one end in the axial direction of the prescribed axis (160), and the third segment portion (83) being connected at the other end in the axial direction of the prescribed axis (160) to the second segment portion (82), and
when the centering unit (51) and the object to be conveyed (56) are coupled to each other, the protruding portion (90) is disposed at the closed end portion (86).

3. The tailstock unit according to claim 2, wherein
the center pin (70) is supported to be movable back and forth in the axial direction of the prescribed axis (160),
the centering unit (51) further includes an elastic member (72) that generates elastic force for pressing the center pin (70) toward a workpiece, and
when the centering unit (51) and the object to be conveyed (56) are coupled to each other, the object to be conveyed (56) comes into contact with the center pin (70) and moves the center pin (70) back in the axial direction of the prescribed axis (160), to cause the elastic force from the elastic member (72) to be applied to the object to be conveyed (56) through the center pin (70), and the protruding portion (90) is pressed against a groove wall (86a) of the closed end portion (86) in the axial direction of the prescribed axis (160).

4. The tailstock unit according to any one of claims 1 to 3, wherein
the centering unit (51) further includes a center holder (61) including an outer circumferential surface (64) centered on the prescribed axis (160),
the object to be conveyed (56) includes
a base portion (93), and
an extending portion (96) provided at a position away from the prescribed axis (160) and radially outward from the prescribed axis (160), the extending portion (96) extending from the base portion (93) in the axial direction of the prescribed axis (160),
when the centering unit (51) and the object to be conveyed (56) are coupled to each other,
the center pin (70) is disposed at a position between the center holder (61) and the base portion (93) in the axial direction of the prescribed axis (160) and surrounded by the extending portion (96) from an outer circumference of the prescribed axis (160),
a tip end portion (96p) of the extending portion (96) is disposed on an outer circumference of the center holder (61) so as to face the outer circumferential surface (64),
the centering unit (51) is provided with the groove portion (80) having a groove shape recessed from the outer circumferential surface (64), and
the object to be conveyed (56) has the protruding portion (90) shaped to protrude from the tip end portion (96p) of the extending portion (96) toward the outer circumferential surface (64).

5. A machine tool comprising:
the tailstock unit (50) according to any one of claims 1 to 4;
a centering unit holding portion (21) that detachably holds the centering unit (51); and
a conveyance device (41) that detachably holds the object to be conveyed (56) and conveys the object to be conveyed (56) together with the centering unit (51).
